# EUROPÄISCHE PATENTANMELDUNG

(11) **EP 2 674 803 A1**
(43) Veröffentlichungstag der Anmeldung: **18.12.2013**
(21) Anmeldenummer: 13170741.6
(22) Anmeldetag: 06.06.2013
(51) Int. Cl.: G02B 23/16, G03B 17/48

(54) **Adapterhülse für Beobachtungsfernrohr**

(30) Priorität: 11.06.2012 AT 6682012
(71) Anmelder: SWAROVSKI OPTIK KG, 6067 Absam (AT)
(72) Erfinder: Kurz, Patrick, 6170 Zirl (AT)
(74) Vertreter: Burger, Hannes

(57) **Zusammenfassung**

Die Erfindung betrifft eine Adapterhülse (6) zur Befestigung eines Zubehörteils (7), insbesondere einer Halterung (5) für ein optisches Aufnahme- oder Messgerät (1), an einem Okularabschnitt (2) eines Beobachtungsfernrohres (3), umfassend einen hohlzylinderähnlichen Grundkörper (9) mit einer Innenfläche (11), die zumindest eine Innenzentrierfläche (12) zur Zentrierung der Adapterhülse (6) am Okularabschnitt (2), insbesondere an einem Außenumfang (13) desselben, aufweist, und mit einer Außenfläche (14), die eine Außenzentrierfläche (15) zur Zentrierung des Zubehörteils (7) an der Adapterhülse (6) und einen Befestigungsabschnitt (21) zur lösbaren Befestigung des Zubehörteils (7) an der Adapterhülse (6) aufweist, und eine Fixiereinrichtung (10) zur kraft- und/oder formschlüssigen Positionssicherung der Adapterhülse (6) am Okularabschnitt (2). Dabei umfasst die Außenzentrierfläche (15) zumindest zwei Außenzentrierabschnitte (16, 19) mit jeweils konstantem Außendurchmesser (17, 20), wobei die Außendurchmesser (17, 20) der Außenzentrierabschnitte (16, 19) in Beobachtungsrichtung (18) ansteigen.

## Beschreibung

Die Erfindung betrifft eine Adapterhülse für ein Beobachtungsfernrohr gemäß dem Oberbegriff des Anspruches 1, einen Befestigungsadapter gemäß dem Oberbegriff des Anspruches 17, ein Adaptersystem gemäß dem Oberbegriff des Anspruches 18 und eine Okularanordnung gemäß dem Oberbegriff des Anspruches 19.

Beobachtungsfernrohre werden häufig nicht nur zur direkten Beobachtung verwendet sondern wird oft auch das erzeugte optische Abbild durch ein am Okular eines Beobachtungsfernrohres angebrachtes weiteres optisches Aufnahme- oder Messgerät aufgenommen und verarbeitet. Beispielsweise werden bei Naturbeobachtungen neben der unmittelbaren Beobachtung häufig auch Bilder der beobachteten Szene aufgenommen und kann dies ein mehrfaches Montieren und Demontieren einer Kamera am Beobachtungsfernrohr erfordern. Um dies zu erleichtern sind spezielle Halterungen entwickelt worden, mit denen eine Kamera schnell und werkzeuglos am Beobachtungsfernrohr montiert bzw. demontiert werden kann, wobei gleichzeitig eine hohe Positioniergenauigkeit erreicht werden soll, um Abbildungsfehler aufgrund mangelnder Übereinstimmung der optischen Achsen zu vermeiden.

Entsprechende Halterungen müssen einen exakten Sitz sowohl am Beobachtungsfernrohr als auch am Aufnahmegerät bzw. Messgerät gewährleisten und müssen solche Halterungen für die jeweils verwendeten Typen geeignet sein. Um nicht für jede Kombination aus unterschiedlichen Beobachtungsfernrohren und Aufnahmegeräten eine komplette eigene Halterung zu benötigen, ist es bekannt, Halterungen, die für ein spezielles Aufnahmegerät geeignet sind, nicht unmittelbar an einem Okular zu befestigen, sondern mittels eines am Okular angebrachten Adapters. Eine solche Halterung entspricht beispielsweise dem Digitalkameraadapter Type DCA der Anmelderin. Die am Okular zu befestigende Adapterhülse, in dem eine radial wirkende Klemmschraube angeordnet ist, besitzt dabei einen deutlich größeren Durchmesser als das Okular selbst und kann die Handlichkeit des Beobachtungsfernrohres beinträchtigen.

Im Zuge der Weiterentwicklung der optischen Abbildungsqualität sowohl bei Beobachtungsfernrohren als auch bei Aufnahme- oder Messgeräten steigen auch bei derartigen Halterungen die Anforderungen an die Genauigkeit bei der Positionierung bei der Montage von Aufnahme- und Messgeräten oder allgemein von Zubehörteilen. Gleichzeitig sollten derartige Halterungen durch geeignete Adapter an unterschiedliche anzuschließende Geräte anpassbar sein. Nachteilig dabei ist weiters, dass Okularabschnitte aufgrund ihrer Form oder ihrer mechanischen Belastbarkeit häufig nicht für die spätere Befestigung von Zubehörteilen oder Adapterhülsen ausgelegt sind und diese daher problematisch ist, insbesondere, wenn versucht wird unpassende oder ungeeignete Halterungen zu montieren.

Die Aufgabe der Erfindung besteht darin eine Adapterhülse oder Okularanordnung mit einer Adapterhülse bereitzustellen, die auch für erhöhte Anforderungen an die Positioniergenauigkeit geeignet ist und gleichzeitig kostengünstig herstellbar ist. Weiters soll die Adapterhülse eine Verbesserung für den Fall eines Modellwechsels beim Beobachtungsfernrohr oder beim optischen Aufnahme- oder Messgerät bieten.

Die Aufgabe der Erfindung wird durch eine gattungsgemäße Adapterhülse mit den kennzeichnenden Merkmalen des Anspruches 1 bzw. einen damit ausgestatteten Befestigungsadapter mit den Merkmalen des Anspruches 17 gelöst.

Dadurch, dass die Außenzentrierfläche zumindest zwei Außenzentrierabschnitte mit jeweils konstantem Außendurchmesser umfasst, wobei die Außendurchmesser der Außenzentrierabschnitte in Beobachtungsrichtung ansteigen, können mehrere vorteilhafte Effekte erzielt werden. Die folgenden Ausführungen beziehen sich dabei gleichbedeutend auf die verwendeten Begriffe Zubehörteil und Halterung.

Die mehreren Außenzentrierabschnitte mit unterschiedlichen Außendurchmessern ergeben in Kombination mit einer entsprechend ausgeformten Halterung eine höhere Positioniergenauigkeit, da sich an den einzelnen Stufen jeweils radiale Spielpassungen ergeben, und die größte vorhandene Spielpassung durch eine geringere Spielpassung weiterer Stufen reduziert wird, was bei einer Außenumfangsfläche mit einem einzigen konstanten Außendurchmesser nicht der Fall ist, sondern hier die einzige und gleichzeitig größte radiale Spielpassung wirksam wird. Wenn man davon ausgeht, dass bei der Herstellung der erfindungsgemäßen Adapterhülse die gleichen Fertigungstoleranzen wie bei bekannten Ausführungsformen erzielbar sind, kann durch diese Maßnahme die Positioniergenauigkeit einer Halterung mit geringem Aufwand erhöht werden.

Weiters ermöglicht diese gewissermaßen abgestufte Form der Außenfläche ein leichteres axiales Aufschieben einer an diese Form einer Adapterhülse angepassten Halterung, da der Außendurchmesser des beobachterseitigen ersten Außenzentrierabschnittes kleiner ist, als der oder die in Beobachtungsrichtung nachfolgenden Außenzentrierabschnitte.

Darüber hinaus regt eine derartige Ausformung der Außenfläche eine entsprechende Ausformung der Halterung an, damit an der dadurch gebildeten Schnittstelle eine optimale Zentrierung über eine möglichst große Länge möglich ist. Dadurch kann der Verwendung von ungeeigneten Ausführungsformen von Halterungen vorgebeugt werden, die beispielsweise die Adapterhülse oder auch den von der Adapterhülse umschlossenen Okularabschnitt mechanisch überbelasten könnten, z.B. indem ungeeignete Befestigungsmittel verwendet werden. Die spezielle Form der Adapterhülse erschwert somit die Anbringung von ungeeigneten Halterungen.

Dadurch, dass die Außenzentrierabschnitte jeweils einen konstanten Außendurchmesser aufweisen, ist es mit einer geeigneten Ausführung der Befestigungsmittel an der Halterung möglich, den Zubehörteil in axialer Richtung zu justieren und an unterschiedlichen Positionen zu befestigen.

Eine vorteilhafte Ausführungsform der Adapterhülse besteht darin, dass der Außendurchmesser von einem Außenzentrierabschnitt zum nachfolgenden Außenzentrierabschnitt um einen Wert zwischen 1 % und 10 % zunimmt. Bei einer vorteilhaften Ausführungsvariante beträgt beispielsweise der Durchmesser des ersten Außenzentrierabschnittes z.B. 62 mm während der Durchmesser des zweiten Außenzentrierabschnittes 63 mm beträgt. Auch durch eine derartig geringe Abstufung können die zuvor beschriebenen vorteilhaften Effekte erzielt werden und gleichzeitig kann mit geringen Materialstärken gearbeitet werden, wodurch sich die Handlichkeit des Beobachtungsteleskops durch die Adapterhülse kaum verändert.

In einer weiteren Ausführungsform kann der Befestigungsabschnitt zwischen zwei in Beobachtungsrichtung zueinander distanzierten Außenzentrierabschnitten angeordnet sein. Die Halterung kann sich dadurch beidseitig des Befestigungsabschnittes an Außenzentrierabschnitten abstützen, wodurch mögliche Schiefstellungen der Halterung aufgrund der vorhandenen Spielpassungen und den wirkenden von den Befestigungsmitteln ausgeübten Klemmkräften reduziert werden.

Der Befestigungsabschnitt kann dabei einen gegenüber den Außenzentrierabschnitten reduzierten Außendurchmesser aufweisen und in Form einer sich über den gesamten Außenumfangs der Adapterhülse erstreckende Vertiefung, Rille oder Nut gebildet sein. Ein derartiger Befestigungsabschnitt kann auch als Zwischenabschnitt bezeichnet werden und kann darin ein Befestigungselement des Zubehörteils eingreifen und dadurch eine formschlüssige axiale Positionssicherung des Zubehörteils gegeben sein. Weiters ist es dadurch möglich bei einem etwas gelockerten Befestigungselement den Zubehörteil um die optische Achse verdrehen zu können, ohne die axiale Position zu verändern.

Da ein vollflächiges Anliegen der Adapterhülse mit minimalen Toleranzen am Okularabschnitt fertigungstechnisch nicht immer leicht zu erzielen ist, kann die Zentrierfunktion auf kleinere Teilbereiche reduziert werden, bei denen die Einhaltung einer hohen Fertigungsgenauigkeit leichter ist. Die Außenzentrierfläche kann dazu zumindest zwei voneinander durch einen Zwischenabschnitt mit reduziertem Durchmesser distanzierte Außenzentrierabschnitte umfassen. Die Distanzierung bewirkt bei gleichen Gesamttoleranzen durch die größere Basis einen geringeren möglichen Kippwinkel der Adapterhülse.

Um die Verwendung von flächigen Befestigungsmitteln der Halterung zu ermöglichen, ohne die Gesamtbaulänge der Adapterhülse nennenswert zu vergrößern ist es von Vorteil, wenn die Vertiefung in Beobachtungsrichtung eine Ausdehnung zwischen 5 mm und 12 mm besitzt.

Wenn die Außenzentrierfläche und/oder der Befestigungsabschnitt der Außenfläche in Beobachtungsrichtung gesehen zumindest teilweise nach der Fixiereinrichtung angeordnet ist, werden die Auswirkungen einer an den Zentrierflächen bestehenden Spielpassung zwischen dem Okularabschnitt und der Adapterhülse sowie zwischen der Adapterhülse und einem Zubehörteil reduziert und dadurch die Positioniergenauigkeit erhöht. Dadurch können trotzdem baulich einfache Fixiereinrichtungen eingesetzt werden, die auch eine größtmögliche Flexibilität bei der Gestaltung der an der Adapterhülse anzubringenden Zubehörteile ergibt. Weiters kann durch die räumliche Aufteilung der Funktionen von Fixierung der Adapterhülse und Befestigung bzw. Zentrierung des Zubehörteils der Gesamtdurchmesser der Adapterhülse und deren Außenabmessungen insgesamt klein gehalten werden. Die Fixiereinrichtung kann dabei Befestigungskräfte in radialer und/oder axialer Richtung auf den Okularabschnitt ausüben, die weiters durch Befestigungskräfte des Zubehörteils verstärkt werden können.

Die Kompensation von möglichen minimalen Schiefstellungen der Adapterhülse und des Zubehörteils wird weiter verstärkt, wenn die Außenzentrierfläche und/oder der Befestigungsabschnitt der Außenfläche in Beobachtungsrichtung gesehen zur Gänze nach der Fixiereinrichtung angeordnet ist. Dadurch erfolgt über die Länge der Adapterhülse betrachtet eine funktionale Gliederung in Fixierung der Adapterhülse und Befestigung des Zubehörteils, wodurch die jeweiligen Abschnitte jeweils optimal an die zu erfüllenden Funktionen angepasst werden können.

Die vorgenannten Vorteile können trotz einer kurzen Gesamtlänge der Adapterhülse erzielt werden, wenn die Fixiereinrichtung in dem beobachterseitigen Endabschnitt der Adapterhülse, insbesondere im beobachterseitigen äußersten Drittel angeordnet ist.

Eine hohe Wiederholgenauigkeit bei der axialen Positionierung eines Zubehörteils am Okularabschnitt kann erzielt werden, wenn die Außenfläche der Adapterhülse ein radial nach außen vorragendes Anschlagelement für den Zubehörteil, insbesondere in Form eines Außenbundes am objektivseitigen Endabschnitt der Adapterhülse, aufweist. Weiters können dadurch Kollisionen zwischen dem Okularabschnitt und dem optischen Zusatzgerät verhindert werden, da der Weg des Zubehörteils durch das Anschlagelement begrenzt wird.

Von Vorteil kann auch sein, wenn einem der Außenzentrierabschnitte in Beobachtungsrichtung ein Übergangsabschnitt mit kegelig zunehmendem Außendurchmesser vorgeordnet ist, wodurch vor diesem Außenzentrierabschnitt keine scharfe Stufe vorliegt und das axiale Aufschieben der Halterung erleichtert wird.

Wenn der Befestigungsabschnitt an der Außenfläche mit einer Innenzentrierfläche an der Innenfläche zusammenfällt, wird die Adapterhülse in diesem Bereich vom Okularabschnitt von innen gestützt, und kann der Befestigungsabschnitt trotz dünner Wandstärke hohe Befestigungskräfte aufnehmen, da diese auch in den Okularabschnitt abgeleitet werden.

Eine Weiterleitung der vom Zubehörteil auf die Adapterhülse ausgeübten Befestigungskräfte in den von dieser umfassten Okularabschnitt wird erleichtert, wenn der Grundkörper im Befestigungsabschnitt lokal eine dünnere Wandstärke als in benachbarten Abschnitten aufweist und dadurch lokal geringfügig nachgeben oder einfedern kann und in Anlage am Okularabschnitt gebracht werden kann. Dadurch kann ohne Einbußen an Positioniergenauigkeit eine Materialeinsparung der Adapterhülse erzielt werden.

Die Adapterhülse kann weiters am Grundkörper ein radial nach innen vorragendes Anschlagelement aufweisen, das eine Anschlagfläche zum axialen Anliegen der Adapterhülse an einer Stirnfläche des Okularabschnitts bildet, wodurch in Richtung der optischen Achse eine bestimmte und jedes Mal identische Position der Adapterhülse erreicht werden kann. Zusätzlich kann dieses Anschlagelement zur Fixierung der Adapterhülse in axialer Richtung verwendet werden, die zusätzlich oder alternativ zu einer Fixierung durch radiale Befestigungskräfte eingesetzt werden kann.

Eine vorteilhafte Ausführungsform einer Fixiereinrichtung besteht in einer Klemmeinrichtung mit federnden und am Umfang verteilten Klemmelementen am Grundkörper, insbesondere in Form einer Spannzange, und mit einem die Klemmelemente radial verschiebendes Klemmorgan, insbesondere in Form einer Überwurfmutter. Gegenüber einer Befestigung mit einer oder mehreren radial angeordneten Klemmschrauben können gleichmäßiger verteilte Fixierkräfte auf den Okularabschnitt bewirkt werden.

Alternativ kann die Fixiereinrichtung ein am Grundkörper radial nach innen vorragendes Anschlagelement mit einer Anschlagfläche zum axialen Anliegen des Grundkörpers am Okularabschnitt und ein an diesem anbringbares Axialspannelement, insbesondere eine Axialspannhülse umfassen, wodurch radiale Kräfte auf ein Okulargehäuse und dadurch bedingte Verformungen reduziert werden können.

Das Axialspannelement kann dabei vorteilhafterweise durch eine in den Okularabschnitt einschraubbare Augenmuschelanordnung gebildet sein und dadurch ein ohnehin vorhandener Bestandteil der Okularanordnung für eine zusätzliche Funktion verwendet werden.

Die zuvor beschriebenen vorteilhaften Effekte können insbesondere bei einem Befestigungsadapter gemäß Anspruch 16 genützt werden.

Die Aufgabe der Erfindung wird auch durch ein Adaptersystem mit den Merkmalen des Anspruches 18 gelöst. Durch die Kombination von Adapterhülsen mit variabler Innengestaltung und Halterungen mit variabler Außenausführung bietet die Verwendung bzw. ein Austausch der Adapterhülse eine kostengünstige Lösung, eine vorhandene Halterung für eine optisches Zusatzgerät auf unterschiedlichen Beobachtungsfernrohren zu verwenden, auch wenn deren Okularabschnitte unterschiedliche Abmessungen aufweisen.

Die Aufgabe der Erfindung wird weiters durch eine Okularanordnung mit den Merkmalen des Anspruches 19 gelöst. Durch die Fixierung der Adapterhülse in axialer Richtung mit der Augenmuschelanordnung können Radialkräfte auf den Okularabschnitt reduziert werden und liegt eine baulich sehr einfache und kostengünstige Ausführung einer Fixiereinrichtung für die Adapterhülse vor.

Wenn dabei der Außendurchmesser der Axialdruckfläche der Augenmuschelanordnung etwa dem Außendurchmesser des Okulargehäuses entspricht, ist eine optimale Verteilung der axialen Befestigungskräfte möglich, ohne das axiale Anbringen eines Zubehörteiles zu behindern.

Zum besseren Verständnis der Erfindung wird diese anhand der nachfolgenden Figuren näher erläutert.

Es zeigen jeweils in stark schematisch vereinfachter Darstellung:
- Fig. 1: einen Okularabschnitt mit Adapterhülse und daran befestigtem Zubehör;
- Fig. 2: einen Längsschnitt durch eine weitere Ausführungsform einer Adapterhülse;
- Fig. 3: einen Längsschnitt durch eine Adapterhülse mit Darstellung von Positioniertoleranzen;
- Fig. 4: einen Längsschnitt durch eine Adapterhülse gemäß dem Stand der Technik mit Darstellung von Positioniertoleranzen;
- Fig. 5: einen Längsschnitt durch eine weitere Ausführungsform einer Adapterhülse;
- Fig. 6: einen Längsschnitt durch eine weitere Ausführungsform einer Adapterhülse;
- Fig. 7: einen Längsschnitt durch eine erfindungsgemäße Okularanordnung;
- Fig. 8: ein Adaptersystem aus verschiedenen Adapterhülsen und Halterungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

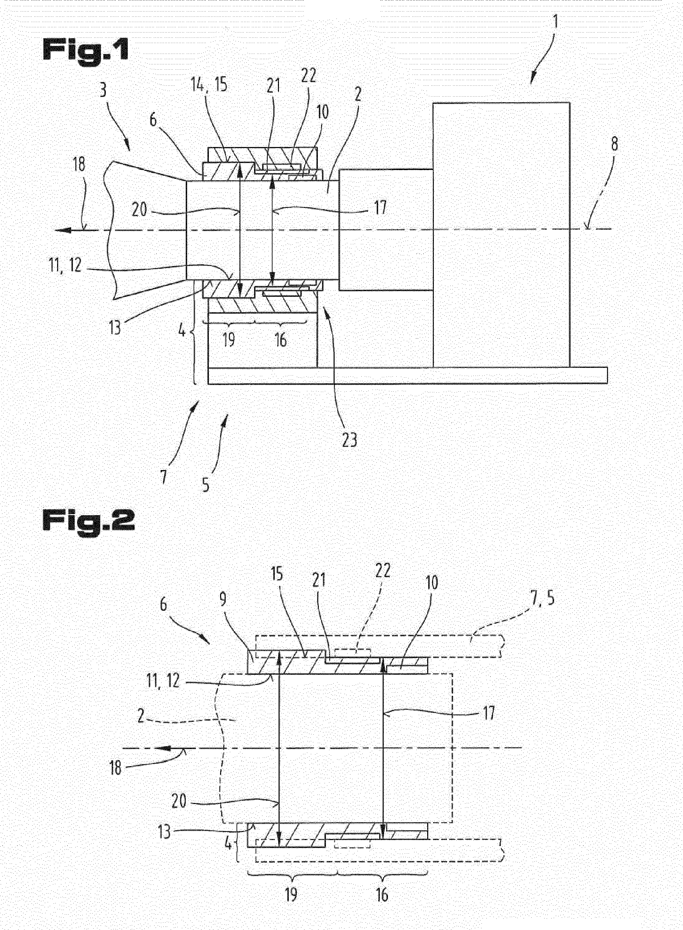

Fig. 1 zeigt in schematischer Seitenansicht die Befestigung eines optischen Aufnahme- oder Messgeräts 1 an einem Okularabschnitt 2 eines Beobachtungsfernrohres 3 mittels eines Befestigungsadapters 4. Der Befestigungsadapter 4 umfasst eine Halterung 5 und sorgt für eine stabile Positionierung des Aufnahme- oder Messgeräts 1 in Bezug auf das Beobachtungsfernrohr 3. Gleichzeitig sollte die Halterung 5 mit einfachen Handgriffen vom Okularabschnitt 2 abnehmbar sein, und ebenso leicht an diesem befestigbar sein, um einem Benutzer einen schnellen und einfachen Wechsel zwischen dem Beobachten eines Objekts durch das Beobachtungsfernrohr 3 und der Verwendung des Aufnahme- oder Messgeräts 1 zu ermöglichen.

Wie Fig. 1 zeigt, ist die Halterung 5 nicht unmittelbar am Okularabschnitt 2 befestigt, sondern umfasst der Befestigungsadapter 4 auch eine am Okularabschnitt 2 angebrachte Adapterhülse 6 und erfolgt die Befestigung der Halterung 5 an der Adapterhülse 6, die dauerhaft am Okularabschnitt 2 verbleiben kann und sowohl ein normales Beobachten durch das Beobachtungsfernrohr 3 hindurch gestattet als auch eine einfache Montage und Demontage der Halterung 5 mit dem Aufnahme- oder Messgerät 1 ermöglicht.

Der Okularabschnitt 2 besitzt eine im Wesentlichen zylindrische Form und kann dabei dem eigentlichen Okular des Beobachtungsteleskops 3 entsprechen oder einem zylindrischen Gehäuseteil am beobachterseitigen Ende des Beobachtungsteleskops 3.

Die Adapterhülse 6 kann nicht nur zur Befestigung einer Halterung 5 benützt werden, sondern auch allgemein zur Befestigung eines beliebigen Zubehörteiles 7 am Okularabschnitt 2 verwendet werden.

Die Adapterhülse 6 dient dazu, einen Zubehörteil 7 in eine definierte Lage bezogen auf die optische Achse 8 des Beobachtungsfernrohres 3 bringen zu können und kann diese Positionierung auch bei mehreren Demontagevorgängen bzw. Montagevorgängen eines Zubehörteiles 7 immer mit der nötigen Wiederholgenauigkeit erfolgen. Um dies zu erreichen, ist es notwendig, dass sowohl die Adapterhülse 6 am Okularabschnitt 2 als auch der Zubehörteil 7 an der Adapterhülse 6 jeweils in einer definierten Position angebracht werden können. Dies betrifft neben der axialen Positionierung insbesondere Maßnahmen zur Zentrierung der Adapterhülse 6 am Okularabschnitt 2 und eines Zubehörteiles 7 an der Adapterhülse 6, wodurch beispielsweise eine optische Achse eines Aufnahme- oder Messgeräts 1 exakt in der optischen Achse 8 des Beobachtungsfernrohres 3 positioniert werden kann.

Die Adapterhülse 6 besteht im Wesentlichen aus einem hohlzylinderähnlichen Grundkörper 9, der den Okularabschnitt 2 an einem Außenumfang umfasst. Zur kraft- und/oder formschlüssigen Positionssicherung der Adapterhülse 6 am Okularabschnitt 2 umfasst diese weiters eine Fixiereinrichtung 10, mit der die erforderlichen Befestigungskräfte zwischen der Adapterhülse 6 und dem Okularabschnitt 2 übertragen werden können.

Die Zentrierung der Adapterhülse 6 am Okularabschnitt 2 erfolgt an deren Innenfläche 11, die dazu zumindest eine Innenzentrierfläche 12, die den Okularabschnitt 2 kontaktiert, aufweist. Vorzugsweise wirkt die Innenzentrierfläche 12 mit einem Außenumfang 13 des Okularabschnitts 2 zusammen, es ist jedoch auch möglich, dass die Zentrierung an einer Stirnfläche oder aber auch einer Innenfläche des Okularabschnitts 2 stattfindet.

Die Befestigung eines Zubehörteils 7 an der Adapterhülse 6 erfolgt an einer Außenfläche 14 der Adapterhülse 6, wobei diese zum Zwecke der Zentrierung des Zubehörteiles 7 eine Außenzentrierfläche 15 aufweist, die dazu dient, den Zubehörteil 7 in eine definierte Lage bezogen auf die Adapterhülse 6 und damit auch bezogen auf das Beobachtungsfernrohr 3 bringen zu können.

Die Außenzentrierfläche 15 umfasst einen ersten Außenzentrierabschnitt 16 am beobachterseitigen Ende mit einem konstanten kleineren Außendurchmesser 17 und in Beobachtungsrichtung 18 nachfolgend einen zweiten Außenzentrierabschnitt 19 mit einem konstanten größeren Außendurchmesser 20. Dadurch wird der Zubehörteil 7 an der Adapterhülse 6 nicht nur an einem zylindrischen Abschnitt zentriert, sondern zumindest an zwei unterschiedlichen zylindrischen Abschnitten, wodurch eine genauere zentrische Positionierung erfolgen kann. Die Innenfläche des Zubehörteils 7, z.B. der Halterung 5, besitzt dabei vorzugsweise ebenfalls zwei Abschnitte mit unterschiedlichen Durchmessern.

Weiters weist die Außenfläche 14 einen Befestigungsabschnitt 21 auf, an dem Befestigungskräfte zwischen dem Zubehörteil 7 und der Adapterhülse 6 übertragen werden. Im Zubehörteil 7 sind dazu Befestigungsmittel 22 vorgesehen, die deaktivierbar und aktivierbar sind, wodurch der Zubehörteil 7 lösbar mit der Adapterhülse 6 verbunden werden kann. Als Befestigungsmittel 22 können beispielsweise Klemmschrauben, Spannelemente, Spannzangen, Spannringe, Spannhülsen usw. dienen.

Wie Fig. 1 zeigt, sind die Außenzentrierabschnitte 16, 19 und der Befestigungsabschnitt 21 an der Außenfläche 14 der Adapterhülse 6 in Beobachtungsrichtung 18 gesehen, zumindest hinter der Fixiereinrichtung 10 angeordnet. Dies bewirkt, wie anhand von weiteren Figuren in Folge erläutert wird, eine zusätzlich verbesserte Positioniergenauigkeit für mit der Adapterhülse 6 am Beobachtungsfernrohr 3 angebrachte Zubehörteile 7.

Die Fixiereinrichtung 10 der Adapterhülse 6 ist vorzugsweise, wie in Fig. 1 dargestellt, in dem beobachterseitigem Endabschnitt 23 oder zumindest im beobachterseitigen Drittel der Gesamtlänge der Adapterhülse 6 angeordnet, wodurch dahinter in Beobachtungsrichtung 18 noch ausreichend Platz für die Außenzentrierabschnitte 16, 19 bzw. den Befestigungsabschnitt 21 vorliegt.

Fig. 2 zeigt einen Längsschnitt durch eine an einem strichliert angedeuteten Okularabschnitt 2 befestigte Adapterhülse 6, an der ein ebenfalls strichliert angedeuteter Zubehörteil 7, beispielsweise in Form einer Halterung 5 befestigt ist. In diesem Ausführungsbeispiel ist die Fixiereinrichtung 10 unmittelbar am beobachterseitigen Ende des Grundkörpers 9 angeordnet und werden mit dieser die zwischen Adapterhülse 6 und Okularabschnitt 2 wirksamen Befestigungskräfte bewirkt. In Beobachtungsrichtung 18 nachfolgend bildet die Innenfläche 11 die Innenzentrierfläche 12 aus, die zur Zentrierung der Adapterhülse 6 am Außenumfang 13 des Okularabschnitts 2 dient.

Der Befestigungsabschnitt 21 der Adapterhülse 6 ist hier zwischen den Außenzentrierabschnitten 16, 19 angeordnet, wodurch der Zubehörteil 7 beidseitig des Befestigungsabschnittes 21 abgestützt ist und eine exzentrische Verschiebung gegenüber der optischen Achse 8 aufgrund der Klemmkräfte vermieden werden kann.

An dieser Stelle sei angemerkt, dass die Fixiereinrichtung 10 selbst eine Zentrierung der Adapterhülse 6 auf dem Okularabschnitt 2 bewirken kann und dass eine Innenzentrierfläche 12 Kräfte zwischen der Adapterhülse 6 und dem Okularabschnitt 2 übertragen kann. Zur Unterscheidung zwischen einer Innenzentrierfläche 12 und einer Fixiereinrichtung 10 wird ausgeführt, dass von der Fixiereinrichtung 10 Befestigungskräfte in Form von Klemmkräften, Druckkräften, Zugkräften oder Spannkräften auf den Okularabschnitt 2 ausgeübt werden, die die Position der Adapterhülse 6 am Okularabschnitt 2 sichern, während an einer Innenzentrierfläche 12 lediglich eine Abstützung der Adapterhülse 6 am Okularabschnitt 2 erfolgt, wodurch zwischen Innenzentrierfläche 12 und Okularabschnitt 2 Kräfte im Wesentlichen erst bei äußeren Belastungen der Adapterhülse 6 durch das Gewicht des Zubehörteiles 7 verursacht werden.

Zwischen einer Innenzentrierfläche 12 der Adapterhülse 6 und einem Außenumfang 13 des Okularabschnitts 2 besteht im Allgemeinen ein minimales Spiel, damit die Adapterhülse 6 ohne Probleme auf den Okularabschnitt 2 aufgesetzt werden kann. Zum Unterschied dazu kann im Bereich der Fixiereinrichtung 10 ein Spiel zwischen Adapterhülse 6 und Okularabschnitt 2 weitgehend ausgeschlossen werden. Eine Fixiereinrichtung 10 bewirkt weiters die Positionssicherung der Adapterhülse 6 in der axialen Beobachtungsrichtung 18, während eine Innenzentrierfläche 12 keinen wesentlichen Beitrag zur Positionssicherung in axialer Richtung liefert.

Bei der Ausführungsform gemäß Fig. 2 liegt der Außenzentrierabschnitt 19 und der Befestigungsabschnitt 21 in Beobachtungsrichtung 18 betrachtet, zur Gänze hinter der Fixiereinrichtung 10.

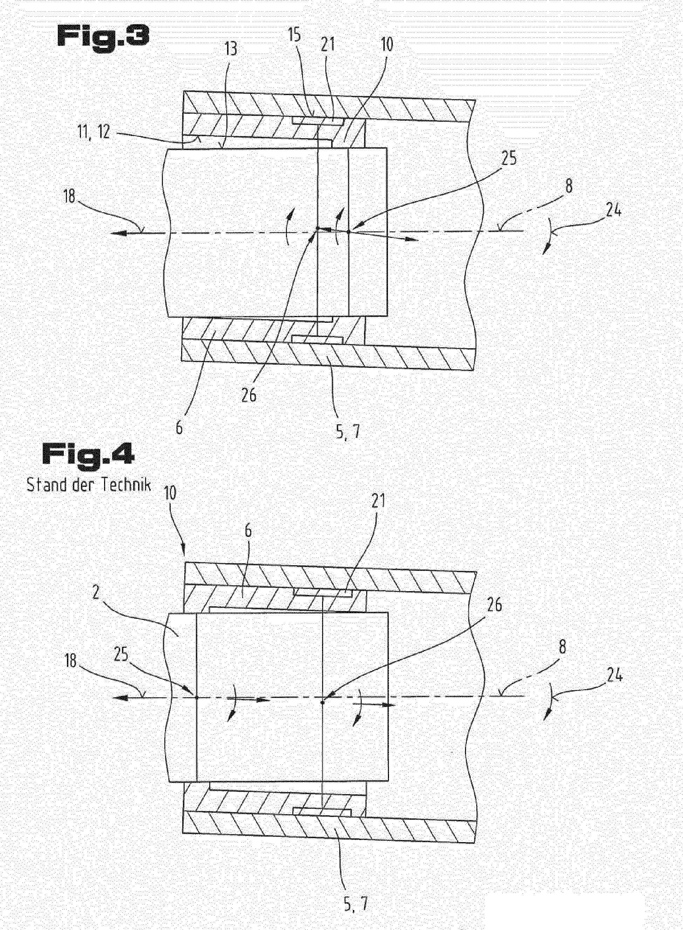

In den Fig. 3 und 4 ist dargestellt, wie sich ein Spiel zwischen der Innenzentrierfläche 12 an der Innenfläche 11 der Adapterhülse 6 und dem Außenumfang 13 des Okularabschnitts 2 auswirkt, wenn auf die Adapterhülse 6 durch ein vom Gewicht eines Aufnahme- oder Messgeräts 1 bewirktes Moment verschoben oder gekippt wird und wie sich dies auf die Positioniergenauigkeit des Zubehörteils 7 bzw. der Halterung 5 und dadurch auch des Aufnahme- oder Messgeräts 1 auswirkt. Dabei zeigt Fig. 3 die Verhältnisse bei Verwendung einer erfindungsgemäßen Adapterhülse 6 und zeigt Fig. 4 die Verhältnisse bei Verwendung einer aus dem Stand der Technik bekannten Adapterhülse.

Das radiale Spiel und die resultierenden Schiefstellungen sind dabei zum Zweck der deutlicheren Darstellung übertrieben dargestellt. Weiters ist in Fig. 3 die erfindungsgemäße Abstufung der Außenzentrierfläche 15 durch Außenzentrierabschnitte 16, 19 mit unterschiedlichen Außendurchmessern 17, 20 der Einfachheit halber nicht dargestellt.

Fig. 3 zeigt, dass ein im Uhrzeigersinn wirkendes Lastmoment 24 die Adapterhülse 6 am Okularabschnitt 2 geringfügig im Uhrzeigersinn verkippt und verformt, wobei die in Fig. 3 am rechten Ende der Adapterhülse 6 angeordnete Fixiereinrichtung 10 gewissermaßen einen Drehpunkt 25 für die Kippbewegung bildet, da hier, wie zuvor erläutert, kein Spiel zwischen Adapterhülse 6 und Okularabschnitt 2 besteht. Dadurch wird der links von der Fixiereinrichtung 10 liegende Abschnitt der Adapterhülse 6 gegenüber der optischen Achse 8 des Okularabschnitts 2 geringfügig angehoben. Erfindungsgemäß ist der Zubehörteil 7 in Beobachtungsrichtung 18 gesehen, nach der Fixiereinrichtung 10 entweder am Befestigungsabschnitt 21 der Adapterhülse 6 befestigt oder zumindest an einer Außenzentrierfläche 15 der Adapterhülse 6 zentriert, wodurch ein zweiter Drehpunkt 26 für die Verkippung des Zubehörteils 5 relativ zur Adapterhülse 6 gebildet sein kann. Durch das einwirkende Lastmoment 24 kann der Zubehörteil 7 gegenüber der Adapterhülse 6 noch zusätzlich geringfügig im Uhrzeigersinn weiter gekippt werden, wodurch sich der in Fig. 3 rechts des zweiten Drehpunktes 26 befindliche Abschnitt des Zubehörteils 7 mit zunehmendem Abstand vom Drehpunkt 26 geringfügig nach unten absenkt. Durch diese beiden gegensinnigen Verschiebungen, die sich zumindest teilweise gegenseitig aufheben, kann die Positionsabweichung eines Aufnahme- oder Messgeräts 1 an der Halterung 5 oder am Zubehörteil 7 von der optischen Achse 8 insgesamt geringer gehalten werden, als bei der in Fig. 4 dargestellten Ausführung einer Adapterhülse 6 gemäß dem Stand der Technik. Bei diesem ist beispielsweise die Fixiereinrichtung 10 am objektivseitigen Ende der Adapterhülse 6 angeordnet und wird hierdurch ein erster Drehpunkt 25, für die Verkippung der Adapterhülse 6 durch das Lastmoment 24 gebildet. Alle in Fig. 4 rechts des Drehpunktes 25 liegenden Abschnitte der Adapterhülse 6 erfahren durch das Lastmoment 24 eine geringfügige Absenkung unter die optische Achse 8, und dadurch auch der durch den rechts der Fixiereinrichtung 10 angeordneten Befestigungsabschnitt 21 gebildete, zweite Drehpunkt 26.

In der in Fig. 4 dargestellten Ausbildung einer Adapterhülse 6 ist die gesamte Absenkung eines Zubehörteiles 7, beispielsweise in Form einer Halterung 5, dementsprechend größer als bei der Ausführung einer Adapterhülse 6 gemäß Fig. 3. Auch wenn es sich bei den Absenkungen nur um Bruchteile von Millimetern handelt, kann mit einer Adapterhülse 6 gemäß Fig. 3 eine weiter verbesserte, optische Abbildungsqualität bei Verwendung einer Aufnahme- bzw. Messanordnung erreicht werden.

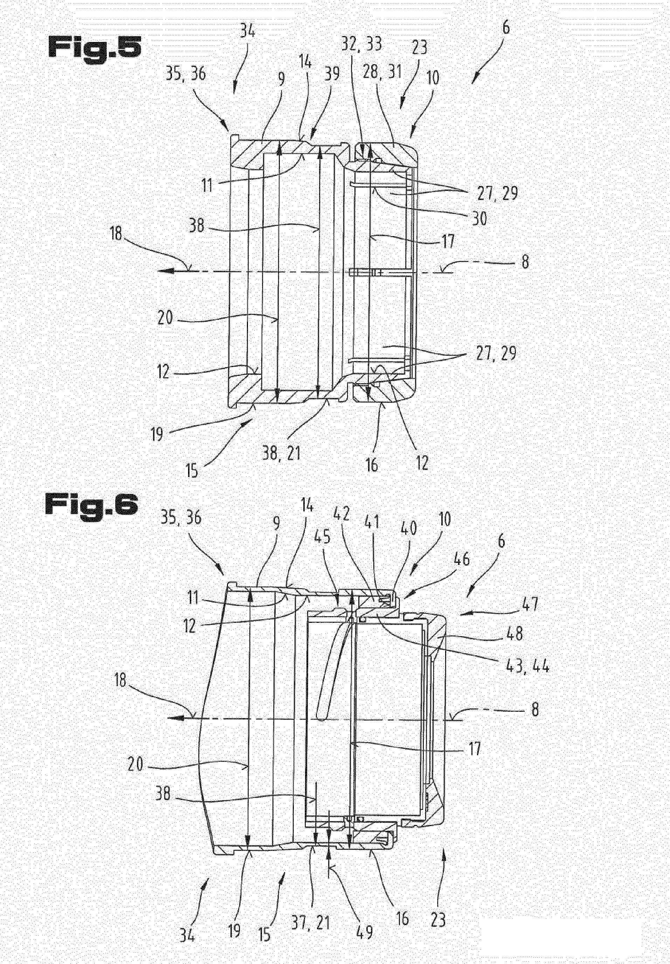

In Fig. 5 ist ein Längsschnitt durch eine mögliche Ausführungsform einer Adapterhülse 6 gezeigt, mit der ein Zubehörteil 7 (siehe Fig. 1 bis 4) an einem Okularabschnitt 2 (siehe Fig. 1 bis 4) befestigt werden kann. Die Adapterhülse 6 umfasst einen im Wesentlichen hohlzylindrischen Grundkörper 9, der in Beobachtungsrichtung 18 über einen Okularabschnitt 2 aufgeschoben werden kann und am beobachterseitigen Endabschnitt 23 mit einer Fixiereinrichtung 10 versehen ist, mit der die Adapterhülse 6 am Okularabschnitt 2 festgesetzt wird. Die Fixiereinrichtung 10 umfasst im dargestellten Ausführungsbeispiel mehrere federnde Klemmelemente 27 z.B. Klemmzungen, die mittels eines Klemmorgans 28 bezogen auf die optische Achse 8 in radialer Richtung verformbar sind und dadurch an den Okularabschnitt 2 anpressbar sind. Die Klemmelemente 27 bilden zusammen eine Spannzange 29, wie sie aus dem Bereich der Werkzeugmaschinen bekannt ist und können die einzelnen Klemmelemente 27 durch Schlitze 30 im Grundkörper 8 hergestellt sein. An ihrer Außenseite sind die Klemmelemente 27 kegelig geformt und können mittels des Klemmorgans 28, hier in Form einer Überwurfmutter 31, in radialer Richtung am Außenumfang eines Okularabschnitts 2 gespannt werden. Die Überwurfmutter 31 greift dazu mit einem Innengewinde 32 in ein passendes Außengewinde 33 am Grundkörper 9 ein und bewirkt ein gleichmäßiges und sehr zentrisches Spannen der Adapterhülse 6 im Bereich dieser Fixiereinrichtung 10.

Die Adapterhülse 6 weist an ihrer Innenfläche 11 zusätzlich zu der von der Fixiereinrichtung 10 gebildeten Innenzentrierfläche 12 eine weitere Innenzentrierfläche 12 auf, die in dem in Beobachtungsrichtung 18 hinteren Endabschnitt 34 angeordnet ist. Wie bereits anhand von den Fig. 3 und 4 erläutert, kann die Innenzentrierfläche 12 im Bereich der Fixiereinrichtung 10 im montierten Zustand als spielfrei angesehen, während die zweite Innenzentrierfläche 11 im Bereich des objektivseitigen Endabschnittes 34 normalerweise ein geringes Spiel zum Außenumfang des Okularabschnitts 2 umfasst, wobei es sich hier jedoch nur um Bruchteile eines Millimeters handelt.

Die Adapterhülse 6 kann weiters, wie in Fig. 5 dargestellt, ein an der Außenfläche 14 radial nach außen vorragendes Anschlagelement 35 für den Zubehörteil 7 aufweisen. Dieses ist in der Ausführung der Fig. 5 durch einen Außenbund 36 am objektivseitigen Endabschnitt 34 gebildet. Durch dieses Anschlagelement 35 kann die wiederholt gleiche axiale Positionierung eines Zubehörteiles 7 an der Adapterhülse 6 erleichtert werden.

Die der Zentrierung eines außen aufgesetzten Zubehörteiles 7 dienende Außenzentrierfläche 15 ist, erfindungsgemäß aus den zumindest zwei oder mehreren Außenzentrierabschnitten 16 und 19 zusammengesetzt, die voneinander durch eine Vertiefung 37 mit reduziertem Außendurchmesser 38 distanziert sind. Wie in Fig. 5 dargestellt, kann beispielsweise auch der Außenumfang der Überwurfmutter 31 beispielsweise als Außenzentrierabschnitt 16 herangezogen werden.

Die Außenzentrierfläche 15 bzw. die einzelnen Außenzentrierabschnitte 16, 19 weisen dabei jeweils einen konstanten Außendurchmesser auf, wodurch in Beobachtungsrichtung 18 eine Verstellmöglichkeit des Zubehörteils 7 an der Außenfläche 14 gegeben sein kann. Dabei ist es möglich, dass zumindest einem der Außenzentrierabschnitte 16, 19 in Beobachtungsrichtung gesehen18 ein Übergangsabschnitt 39 mit kegelig zunehmendem Außendurchmesser vorgeordnet ist, wodurch das Aufschieben eines Zubehörteiles 7 auf die Adapterhülse 6 erleichtert wird.

Die Vertiefung 37 mit verringertem Außendurchmesser 38 kann insbesondere den Befestigungsabschnitt 21 bilden, an dem durch Befestigungsmittel am Zubehörteil 7 dessen Befestigung an der Adapterhülse 6 stattfinden kann. Wie Fig. 5 zeigt, befindet sich in diesem Ausführungsbeispiel ein Teil der Außenfläche 14, nämlich der in Beobachtungsrichtung 18 hintere Außenzentrierabschnitt 19 und auch der Befestigungsabschnitt 21 in Form der Vertiefung 37 hinter der Fixiereinrichtung 10, wodurch auch die anhand von Fig. 3 beschriebene, weiter verbesserte Befestigung eines Zubehörteils 7 erfolgen kann.

Bei einer erfindungsgemäßen Adapterhülse 6 ist die Innenfläche 11 mit der Innenzentrierfläche 12 und der Fixiereinrichtung 10 an die jeweiligen Abmessungen eines Okularabschnitts 2 angepasst und sind daher für unterschiedliche Okulartypen auch unterschiedliche Ausführungsformen der Innenfläche 11 bzw. deren Innenzentrierflächen 12 bzw. der Fixiereinrichtung 10 erforderlich. Damit zu diesen unterschiedlichen, auf den jeweiligen Okulartyp abgestimmten Adapterhülsen 6 nicht jeweils auch ein spezieller Zubehörteil 7 erforderlich ist, ist es von Vorteil, wenn die Außenfläche 14 mit ihrer Außenzentrierfläche 15 und dem Befestigungsabschnitt 21 bei den verschiedenen Typen der Adapterhülse 6 jeweils im Wesentlichen die gleichen Abmessungen besitzt.

In der Fig. 6 ist eine weitere und gegebenenfalls für sich eigenständige Ausführungsform einer Adapterhülse 6 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Diese Ausführungsform weist eine Außenfläche 14 auf, die im Wesentlichen jener der Ausführungsform in Fig. 5 entspricht, das heißt die Außendurchmesser 17, 20 der Außenzentrierabschnitte 16, 19 besitzen Abmessungen, wodurch ein auf eine Adapterhülse 6 gemäß Fig. 5 aufsetzbarer Teil 7 auch auf eine Adapterhülse 6 gemäß Ausführung Fig. 6 aufsetzbar ist. Beispielsweise beträgt der erste Außendurchmesser 17 z.B. 62 mm und der zweite Außendurchmesser 20 z.B. 63 mm

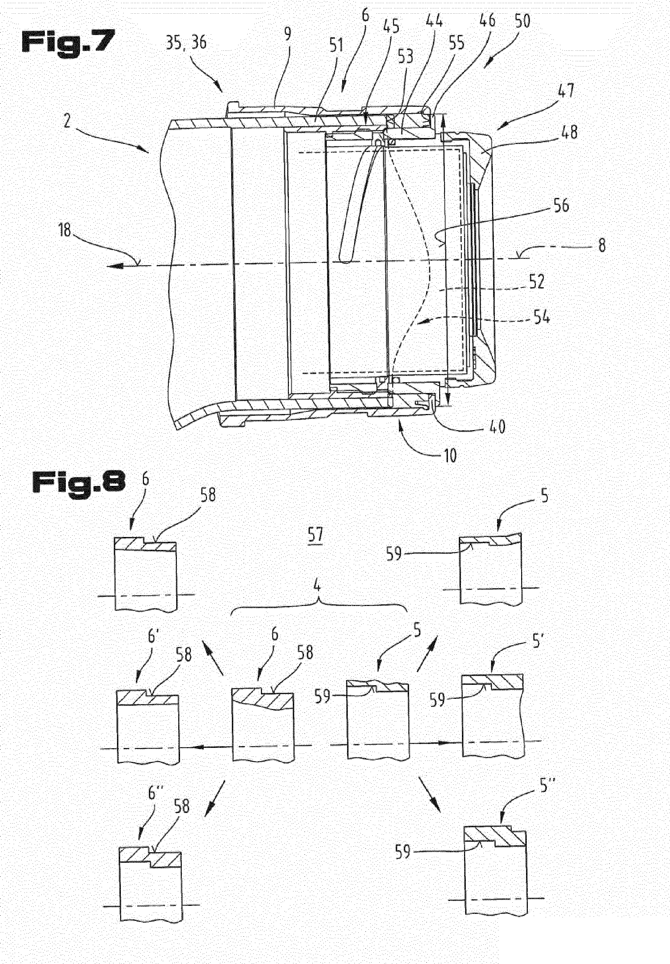

Die Innenfläche 11 ist anders gestaltet als bei der Ausführung gemäß Fig. 5 und ist daher die Adapterhülse 6 für eine andere Ausführungsform eines Okularabschnittes 2 vorgesehen. Die Fixiereinrichtung 10 ist wiederum am beobachterseitigen Endabschnitt 23 der Adapterhülse 6 angeordnet. Abweichend zu der Ausführungsform in Fig. 5, bei der eine radiale Klemmung der Adapterhülse 6 auf dem Außenumfang des Okularabschnittes 2 erfolgt, bewirkt die Fixiereinrichtung 10 gemäß Fig. 6 eine axiale Anpressung der Adapterhülse 6 in Beobachtungsrichtung 18 auf den Okularabschnitt 2, z.B. an seinem Okulargehäuse, wie es etwa in Fig. 7 dargestellt ist.

Die Adapterhülse 6 bzw. deren Grundkörper 9 weist dazu ein radial nach innen vorragendes Anschlagelement 40 auf, das eine Anschlagfläche 41 bildet, die axial gegen eine Stirnfläche eines Okulargehäuses gepresst werden kann. Zwischen der Anschlagfläche 41 und dem Okulargehäuse kann weiters ein Zwischenring 42 vorgesehen sein, mit dem die axiale Position der Adapterhülse 6 bezogen auf den Okularabschnitt 2 festgelegt werden kann. Ein derartiges Anschlagelement 40 kann auch bei einer Fixiereinrichtung gemäß Fig. 5 oder einer anderen Ausführungsform einer Fixiereinrichtung 10 vorgesehen sein, ist jedoch für eine axiale Fixierung einer Adapterhülse 6 gemäß Fig. 6 zwingend erforderlich. Die axiale Anpressung der Adapterhülse 6 gegen den Okularabschnitt 2 erfolgt mittels eines Axialspannelements 43, das am Okularabschnitt 2 anbringbar ist und die Adapterhülse 6 in axialer Richtung gegen den Okularabschnitt 2 pressen kann, wodurch eine kraft- und/oder formschlüssige Fixierung erfolgt. Das Axialspannelement 43 kann wie in fig. 6 dargestellt, durch eine Einschraubhülse 44 gebildet sein, die mit einem Außengewinde 45 in ein hohlzylindrisches Okulargehäuse eingeschraubt werden kann und einen Außenbund 46 aufweist, mit der die Adapterhülse 6 in Blickrichtung 18 gegen das Okulargehäuse verspannt werden kann. Diese Einschraubhülse 44 kann vorteilhafterweise gleichzeitig ein Bestandteil einer Augenmuschelanordnung 47 sein, bei der eine Augenmuschel 48 verstellbar in der Einschraubhülse 44 gelagert ist. Diese Lagerung kann beispielsweise, wie in Fig. 6 angedeutet, durch eine schraubenförmige Kulissenführung erfolgen, wodurch ein Verdrehen der Augenmuschel 48 eine axiale Verstellung derselben bewirkt.

Auch bei dieser Ausführungsform einer Adapterhülse 6 sind zumindest Teile der Außenzentrierfläche 15 bzw. der Befestigungsabschnitt 21 in Beobachtungsrichtung 18 nach der Fixiereinrichtung 10 angeordnet, wodurch wiederum die stabile und positionsgenaue Lagerung eines Zubehörteiles 7 an der Adapterhülse 6 erfolgen kann. Die Adapterhülse 6 kann einen Grundkörper 9 mit relativ dünner Wandstärke aufweisen, wenn die Form der Innenfläche 11 gut an den Okularabschnitt 2 angepasst ist. Wie Fig. 6 weiters zeigt, kann im Befestigungsabschnitt 21 eine lokal geringere Wandstärke 49 vorgesehen sein, wodurch zumindest ein Teil der vom Zubehörteil 7 im Befestigungsabschnitt 21 auf den Grundkörper 9 ausgeübten Befestigungskräfte in den Okularabschnitt 2 abgeleitet werden. Zu diesem Zweck ist der Befestigungsabschnitt 21 im Bereich einer Innenzentrierfläche 12 angeordnet und können daher Befestigungskräfte ohne nennenswerte Verformungen der Adapterhülse 6 in den von dieser umfassten Okularabschnitt 2 abgeleitet werden.

Fig. 7 zeigt einen Längsschnitt durch eine Okularanordnung 50, bei der auf einem Okularabschnitt 2 eine Adapterhülse 6 gemäß der Ausführungsform in Fig. 6 befestigt ist. Die Okularanordnung 50 umfasst dabei ein hohlzylinderähnliches Okulargehäuse 51, in dem die mit strichlierten Linien angedeutete Okularoptik 52 angeordnet ist.

Zur Befestigung der Adapterhülse 6 am Okulargehäuse 51 wird diese axial auf das Okulargehäuse 51 in Beobachtungsrichtung 18 aufgeschoben, bis das Anschlagelement 40 mit seiner Anschlagfläche 41 gegen eine Axialdruckfläche 53 am Okulargehäuse 51 anliegt. Die Axialdruckfläche 53 ist im dargestellten Ausführungsbeispiel gleichzeitig die Stirnfläche des Okulargehäuses 51, es könnte jedoch auch eine andere Axialdruckfläche an einem nach außen oder innen vorragenden Anschlagelement vorgesehen sein.

Wie in Fig. 7 strichliert dargestellt, können die Anschlagfläche 41 und die Stirnfläche des Okulargehäuses 51 eine Kontur 54 aufweisen, die nicht rotationssymmetrisch ist, wodurch die Adapterhülse 6 nicht nur kraftschlüssig sondern auch formschlüssig gegen eine Drehung um die optische Achse 8 gesichert werden kann.

Die Fixierung der Adapterhülse 6 erfolgt mittels der Einschraubhülse 44, die mit einem Außengewinde 45 in das Okulargehäuse 51 eingeschraubt werden kann. Der Außenbund 46 am beobachterseitigen Ende der Einschraubhülse 44 bildet eine zweite Axialdruckfläche 55, die das radial nach innen ragende Anschlagelement 40 der Adapterhülse 6 gegen die Axialdruckfläche 53 am Okulargehäuse 51 presst. Vorzugsweise entspricht der Außendurchmesser 56 der Axialdruckfläche 55 der Augenmuschelanordnung 47 etwa dem Außendurchmesser des Okulargehäuses 51, wodurch ein axiales Aufschieben eines Zubehörteils 7 auf die Adapterhülse 6 nicht behindert wird. Die axiale Anpresskraft kann dadurch möglichst großflächig auf die beobachterseitige Stirnfläche der Adapterhülse 6 verteilt werden.

Fig. 8 zeigt schematisch ein Adaptersystem 57 umfassend unterschiedliche Adapterhülsen 6, 6', 6'', ... sowie unterschiedliche Halterungen 5, 5', 5 ", ....

Die unterschiedlichen Adapterhülsen 6, 6', 6'', ... weisen bei unterschiedlichen Innenausführungen im Wesentlichen identisch geformte Anschlussflächen 58 für eine Halterung 5 und im Wesentlichen identische Außenabmessungen auf. Weiters weisen die unterschiedlichen Halterungen 5, 5', 5",... bei unterschiedlichen Außenausführungen im Wesentlichen identische Anschlussflächen 59 für eine Adapterhülse 6 und im Wesentlichen identische Innenabmessungen auf.

Die Anschlussflächen 58, 59 des Adaptersystems bilden somit eine einheitliche Schnittstelle, die eine Vielzahl von Kombinationen ermöglicht. Die Form der Anschlussflächen 58 und 59 ist nicht auf die dargestellte abgestufte Ausführung beschränkt, sondern es sind auch andere zur gegenseitigen Positionierung und Zentrierung von Adapterhülse 6 und Halterung 5 geeignete Formen der Anschlussflächen 58, 59 möglich.

Die Ausführungsbeispiele zeigen mögliche Ausführungsvarianten der Adapterhülse 6 bzw. der Okularanordnung 50, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Adapterhülse 5 bzw. der Okularanordnung 45 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 5; 6; 7; 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Aufnahme- oder Messgerät | 36 | Außenbund |
| 2 | Okularabschnitt | 37 | Vertiefung |
| 3 | Beobachtungsfernrohr | 38 | Außendurchmesser |
| 4 | Befestigungsadapter | 39 | Übergangsabschnitt |
| 5 | Halterung | 40 | Anschlagelement |
| | | | |
| 6 | Adapterhülse | 41 | Anschlagfläche |
| 7 | Zubehörteil | 42 | Zwischenring |
| 8 | Optische Achse | 43 | Axialspannelement |
| 9 | Grundkörper | 44 | Einschraubhülse |
| 10 | Fixiereinrichtung | 45 | Außengewinde |
| | | | |
| 11 | Innenfläche | 46 | Außenbund |
| 12 | Innenzentrierfläche | 47 | Augenmuschelanordnung |
| 13 | Außenumfang | 48 | Augenmuschel |
| 14 | Außenfläche | 49 | Wandstärke |
| 15 | Außenzentrierfläche | 50 | Okularanordnung |
| | | | |
| 16 | Außenzentrierabschnitt | 51 | Okulargehäuse |
| 17 | Außendurchmesser | 52 | Okularoptik |
| 18 | Beobachtungsrichtung | 53 | Axialdruckfläche |
| 19 | Außenzentrierabschnitt | 54 | Kontur |
| 20 | Außendurchmesser | 55 | Axialdruckfläche |
| | | | |
| 21 | Befestigungsabschnitt | 56 | Außendurchmesser |
| 22 | Befestigungsmittel | 57 | Adaptersystem |
| 23 | Endabschnitt | 58 | Anschlussfläche |
| 24 | Lastmoment | 59 | Anschlussfläche |
| 25 | Drehpunkt | | |
| | | | |
| 26 | Drehpunkt | | |
| 27 | Klemmelement | | |
| 28 | Klemmorgan | | |
| 29 | Spannzange | | |
| 30 | Schlitz | | |
| | | | |
| 31 | Überwurfmutter | | |
| 32 | Innengewinde | | |
| 33 | Außengewinde | | |
| 34 | Endabschnitt | | |
| 35 | Anschlagelement | | |

## Patentansprüche

1. Adapterhülse (6) zur Befestigung eines Zubehörteils (7), insbesondere einer Halterung (5) für ein optisches Aufnahme- oder Messgerät (1), an einem Okularabschnitt (2) eines Beobachtungsfernrohres (3), umfassend einen hohlzylinderähnlichen Grundkörper (9) mit einer Innenfläche (11), die zumindest eine Innenzentrierfläche (12) zur Zentrierung der Adapterhülse (6) am Okularabschnitt (2), insbesondere an einem Außenumfang (13) desselben, aufweist, und mit einer Außenfläche (14), die eine Außenzentrierfläche (15) zur Zentrierung des Zubehörteils (7) an der Adapterhülse (6) und einen Befestigungsabschnitt (21) zur lösbaren Befestigung des Zubehörteils (7) an der Adapterhülse (6) aufweist, und eine Fixiereinrichtung (10) zur kraft- und/oder formschlüssigen Positionssicherung der Adapterhülse (6) am Okularabschnitt (2), **dadurch gekennzeichnet, dass** die Außenzentrierfläche (15) zumindest zwei Außenzentrierabschnitte (16, 19) mit jeweils konstantem Außendurchmesser (17, 20) umfasst, wobei die Außendurchmesser (17, 20) der Außenzentrierabschnitte (16, 19) in Beobachtungsrichtung (18) ansteigen.

2. Adapterhülse (6) nach Anspruch 1, **dadurch gekennzeichnet, dass** der Außendurchmesser (17) von einem Außenzentrierabschnitt (16) zum nachfolgenden Außenzentrierabschnitt (19) um einen Wert zwischen 1 % und 10 % zunimmt.

3. Adapterhülse (6) nach Anspruch 1 oder 2, **dadurch gekennzeichnet, dass** der Befestigungsabschnitt (21) zwischen zwei in Beobachtungsrichtung (18) voneinander distanzierten Außenzentrierabschnitten (16, 19) angeordnet ist.

4. Adapterhülse (6) nach einem der Ansprüche 1 bis 3, **dadurch gekennzeichnet, dass** der Befestigungsabschnitt (21) einen gegenüber den Außenzentrierabschnitten (16, 19) reduzierten Außendurchmesser (38) aufweist und in Form einer sich über den gesamten Außenumfangs der Adapterhülse (6) erstreckende Vertiefung (37), Rille oder Nut gebildet ist

5. Adapterhülse (6) nach Anspruch 4, **dadurch gekennzeichnet, dass** die Vertiefung (37) in Beobachtungsrichtung (18) eine Ausdehnung zwischen 5 mm und 12 mm aufweist.

6. Adapterhülse (6) nach einem der vorhergehenden Ansprüche, **dadurch gekennzeichnet, dass** zumindest ein Außenzentrierabschnitt (19) und/oder der Befestigungsabschnitt (21) der Außenfläche (14) in Beobachtungsrichtung (18) gesehen zumindest teilweise nach der Fixiereinrichtung (10) angeordnet ist.

7. Adapterhülse (6) nach Anspruch 6, **dadurch gekennzeichnet, dass** zumindest ein Außenzentrierabschnitt (19) und/oder der Befestigungsabschnitt (21) der Außenfläche (14) in Beobachtungsrichtung (18) gesehen zur Gänze nach der Fixiereinrichtung (10) angeordnet ist.

8. Adapterhülse (6) nach einem der vorhergehenden Ansprüche, **dadurch gekennzeichnet, dass** die Fixiereinrichtung (10) in dem beobachterseitigen Endabschnitt (23) der Adapterhülse (6), insbesondere im beobachterseitigen äußersten Drittel angeordnet ist.

9. Adapterhülse (6) nach einem der vorhergehenden Ansprüche, **dadurch gekennzeichnet, dass** der Grundkörper (9) an der Außenfläche (14) ein radial nach außen vorragendes Anschlagelement (35) für den Zubehörteil (7), insbesondere in Form eines Außenbundes (36) am objektivseitigen Endabschnitt (34) der Adapterhülse (6), aufweist.

10. Adapterhülse (6) nach einem der vorhergehenden Ansprüche, **dadurch gekennzeichnet, dass** zumindest einem der Außenzentrierabschnitte (19) in Beobachtungsrichtung (18) gesehen ein Übergangsabschnitt (39) mit kegelig zunehmenden Außendurchmesser vorgeordnet ist.

11. Adapterhülse (6) nach einem der vorhergehenden Ansprüche, **dadurch gekennzeichnet, dass** der Befestigungsabschnitt (21) an der Außenfläche (14) mit einer Innenzentrierfläche (12) an der Innenfläche (11) zusammenfällt.

12. Adapterhülse (6) nach Anspruch 11, **dadurch gekennzeichnet, dass** der Grundkörper (9) im Befestigungsabschnitt (21) lokal eine geringere Wandstärke (49) als in benachbarten Abschnitten aufweist, wodurch zumindest ein Teil der vom Zubehörteil (7) im Befestigungsabschnitt (21) auf den Grundkörper (9) ausgeübten Befestigungskräfte in den Okularabschnitt (2) abgeleitet werden.

13. Adapterhülse (6) nach einem der vorhergehenden Ansprüche, **dadurch gekennzeichnet, dass** der Grundkörper (9) ein radial nach innen vorragendes Anschlagelement (40) aufweist, das eine Anschlagfläche (41) zum axialen Anliegen der Adapterhülse (6) am Okularabschnitt (2), insbesondere an einer Stirnfläche eines Okulargehäuses (51) bildet.

14. Adapterhülse (6) nach einem der vorhergehenden Ansprüche, **dadurch gekennzeichnet, dass** die Fixiereinrichtung (10) eine Klemmeinrichtung mit federnden und am Umfang verteilten Klemmelementen (27) am Grundkörper (9), insbesondere in Form einer Spannzange (29), und ein die Klemmelemente (27) radial verschiebendes Klemmorgan (28), insbesondere in Form einer Überwurfmutter (31) umfasst.

15. Adapterhülse (6) nach einem der vorhergehenden Ansprüche, **dadurch gekennzeichnet, dass** die Fixiereinrichtung (10) ein am Grundkörper (9) radial nach innen vorragendes Anschlagelement (40) mit einer, vorzugsweise nicht rotationssymmetrischen, Anschlagfläche (41), zum axialen Anliegen des Grundkörpers (9) am Okularabschnitt (2) und ein an diesem anbringbares Axialspannelement (43), insbesondere eine Einschraubhülse (44) umfasst.

16. Adapterhülse (6) nach Anspruch 15, **dadurch gekennzeichnet, dass** das Axialspannelement (43) als in den Okularabschnitt (2) einschraubbare Augenmuschelanordnung (47) ausgebildet ist.

17. Befestigungsadapter (4) zur Befestigung eines optisches Aufnahme- oder Messgeräts (1) an einem Okularabschnitt (2) eines Beobachtungsfernrohres (3), umfassend eine am Okularabschnitt (2) fixierbare Adapterhülse (6) und eine am optischen Aufnahme- oder Messgerät (1) fixierbare Halterung (5), wobei Adapterhülse (6) und Halterung (5) eine gemeinsame lösbare mechanische Schnittstelle aufweisen, **dadurch gekennzeichnet, dass** die Adapterhülse (6) nach einem der Ansprüche 1 bis 16 gebildet ist und die Halterung (5) eine mit zumindest einem der Außenzentrierabschnitte (16, 19) zusammenwirkende Innenzentrierfläche, insbesondere zwei oder mehrere mit den Außenzentrierabschnitten (16, 19) zusammenwirkende Innenzentrierabschnitte mit unterschiedlichen Innendurchmessern aufweist.

18. Adaptersystem (57) zur Befestigung eines optischen Aufnahme- oder Messgeräts (1) an unterschiedlichen Okularabschnitten (2) verschiedener Beobachtungsfernrohre (3) und/oder unterschiedlicher optischer Aufnahme- oder Messgeräte (1) an einem Okularabschnitt (2) eines Beobachtungsfernrohres (3), **dadurch gekennzeichnet, dass** das Adaptersystem unterschiedliche am Okularabschnitt (2) fixierbare etwa hohlzylinderförmige Adapterhülsen (6, 6', 6", ...), insbesondere nach einem der Ansprüche 1 bis 16, und/oder unterschiedliche am optischen Aufnahme- oder Messgerät (1) fixierbare, auf einer Adapterhülse (6), insbesondere nach einem der Ansprüche 1 bis 16, befestigbare Halterungen (5, 5', 5",...) umfasst, wobei die unterschiedlichen Adapterhülsen (6, 6', 6", ...) bei unterschiedlichen Innenausführungen im Wesentlichen identisch geformte Anschlussflächen (58) für die Halterung (5) und im Wesentlichen identische Außenabmessungen aufweisen und/oder die unterschiedlichen Halterungen (5, 5', 5",...) bei unterschiedlichen Außenausführungen im Wesentlichen identische Anschlussflächen (59) für die Adapterhülse (6) und im Wesentlichen identische Innenabmessungen aufweisen.

19. Okularanordnung (50) für ein Beobachtungsfernrohr (3), umfassend ein hohlzylinderähnliches Okulargehäuse (51), eine innerhalb des Okulargehäuses (51) positionierte Okularoptik (52), eine benutzerseitig das Okulargehäuse (51) abschließende hohlzylinderförmige Augenmuschelanordnung (47) und eine das Okulargehäuse (451) umfassende Adapterhülse (6), vorzugsweise nach einem der vorhergehenden Ansprüche, zur Befestigung eines Zubehörteils (7), insbesondere einer Halterung (5) für ein optisches Aufnahme- oder Messgerät (1), am Okulargehäuse (51), **dadurch gekennzeichnet, dass** ein beobachterseitiger Endabschnitt (123) der Adapterhülse (6) von einer Axialdruckfläche (55) an der Augenmuschelanordnung (47) gegen eine Axialdruckfläche (53) oder Stirnfläche am Okulargehäuse (51) gedrückt wird.

20. Okularanordnung (50) nach Anspruch 19, **dadurch gekennzeichnet, dass** der Außendurchmesser (56) der Axialdruckfläche (55) der Augenmuschelanordnung (47) etwa dem Außendurchmesser des Okulargehäuses (51) entspricht.
